# EUROPÄISCHE PATENTSCHRIFT

(11) **EP 3 256 333 B1**
(45) Veröffentlichungstag und Bekanntmachung des Hinweises auf die Patenterteilung: **24.10.2018**
(21) Anmeldenummer: 15804492.5
(22) Anmeldetag: 03.12.2015
(51) Int. Cl.: B60C 11/03, B60C 11/12, B60C 11/13

(54) **FAHRZEUGLUFTREIFEN**
PNEUMATIC TYRE FOR A VEHICLE
PNEUMATIQUE DE VÉHICULE

(30) Priorität: 13.02.2015 DE 102015202613
(43) Veröffentlichungstag der Anmeldung: 20.12.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/078487
(87) Internationale Veröffentlichungsnummer: WO 2016/128085

(56) Entgegenhaltungen:
- EP-A1- 2 716 477
- WO-A1-2014/030476
- DE-A1-102012 108 384

## Beschreibung

Die Erfindung betrifft einen Fahrzeugluftreifen mit einem Laufstreifen, welcher durch Umfangsrillen in in Umfangsrichtung umlaufende Profilpositive gegliedert ist, wobei zu diesen Profilpositiven zumindest eine in Umfangsrichtung umlaufende Profilrippe gehört, in welcher parallel zueinander einschnittartig ausgebildete Querrillen verlaufen, die in zumindest eine die Profilrippe begrenzende Umfangsrille münden und zumindest in einem Abschnitt ihrer Erstreckung nahe der Rippenaußenfläche durch eine Fase verbreitert sind sowie bogenförmig zur Umfangsrille verlaufen, wobei die Fasen jeweils an der bogeninnenseitig verlaufenden Rillenflanke der Querrillen ausgebildet sind.

Ein Fahrzeugluftreifen der eingangs genannten Art ist beispielsweise aus der EP 2 716 477 A1 bekannt. Die in den Profilrippen verlaufenden, einschnittartig ausgebildeten Querrillen erstrecken sich in Draufsicht kreisbogenartig. Die in schulterseitigen Profilrippen vorgesehen Querrillen verlaufen in Draufsicht unter einem Winkel von 60° bis 90° zur Umfangsrichtung, die in mittleren Profilrippen vorgesehenen Querrillen in Draufsicht unter einem Winkel von 30° bis 80° zur Umfangsrichtung. Derartige Querrillen sollen die Wasserableitung verbessern.

Die DE 10 2012 108 384 A1 offenbart einen weiteren Fahrzeugluftreifen mit einem Laufstreifen mit einer Profilrippe, in welcher einschnittartig ausgebildete Rillen verlaufen. Die einschnittartig ausgebildeten Rillen weisen jeweils zwei unter einem stumpfen Winkel zueinander und im Wesentlichen gerade verlaufende Rillenabschnitte auf, wobei der eine Rillenabschnitt im Wesentlichen in Laufstreifenquerrichtung und der zweite Rillenabschnitt in Umfangsrichtung verläuft. Der in Umfangsrichtung verlaufende Rillenabschnitt weist eine geringere Tiefe auf als der andere Rillenabschnitt und ist im Querschnitt von zwei zueinander V-förmig verlaufenden Rillenflanken begrenzt. Derartige Rillen sollen die Wasserableitung aus dem mittleren Bereich der Profilrippe verbessern.

Aus der WO 2014/030476 A1 ist ein Fahrzeugluftreifen mit einem Laufstreifen mit durch in Draufsicht wellenförmig verlaufenden Umfangsrillen begrenzten mittleren Profilrippen bekannt. In den Profilrippen verlaufen einschnittartige Querrillen, welche an beiden Rillenflanken durch Fasen verbreitert sind und einen in eine Umfangsrille einmündenden Rillenabschnitt aufweisen. Dieser Reifen soll beim Fahren geringe Geräuschemissionen verursachen und einen guten Nassgriff aufweisen.

An die Profilierung von Laufstreifen werden in letzter Zeit besonders hohe Anforderungen hinsichtlich der Generierung eines geringen Abrollgeräusches gestellt. Es ist bekannt, dass einschnittartig und daher schmal ausgeführte Rillen in Profilrippen dazu beitragen, ein geringes Abrollgeräusch zu generieren, solche Rillen haben jedoch den Nachteil, dass an der Profil- bzw. Rippenaußenfläche zur Verfügung stehende Kanten nicht im gewünschten Ausmaß wirken können, sodass vor allem die Nassbremseigenschaften des Reifens leiden.

Der Erfindung liegt die Aufgabe zu Grunde, einen Laufstreifen der eingangs genannten Art diesbezüglich zu verbessern, es soll mit einschnittartig ausgebildeten Querrillen in Profilrippen der Zielkonflikt zwischen einer geringen Geräuschemission und einem guten Nassbremsverhalten besser als bisher gelöst werden.

Gelöst wird die gestellte Aufgabe erfindungsgemäß dadurch, dass der Übergangsbereich zwischen jener Rillenflanke der Umfangsrille, in welche die einschnittartig ausgebildeten Querrillen münden, und der Außenfläche der Profilrippe gerundet ausgeführt ist, wobei die Querrillen einen ersten in die Umfangsrille mündenden Schenkel, welcher sich unter einem spitzen Winkel zur Umfangsrichtung erstreckt, und einen zweiten Schenkel aufweisen, welcher, gegensinnig zum ersten Schenkel verlaufend, sich ebenfalls unter einem spitzen Winkel zur Umfangsrichtung erstreckt.

Erfindungsgemäß ausgeführte Fahrzeugluftreifen weisen daher im Laufstreifen die für eine geringe Geräuschemission günstigen einschnittartig und daher schmal ausgebildeten Querrillen auf, wobei durch die Bogenform bzw. den bogenförmigen Verlauf dieser Rillen beim Abrollen des Reifens ein "harmonischer" Kanteneinlauf in den Untergrund erfolgt, welcher für ein leises Abrollgeräusch besonders vorteilhaft ist. Die an der Innenseite der jeweiligen Bogenform an der Profiloberfläche ausgebildeten Fasen unterstützen auf nassen Fahrbahnen eine gute Wasserableitung und verhindern auch gleichzeitig ein Einrollen der betreffenden Kante. Der abgerundete Kantenbereich der Profilrippe am Übergang zur Umfangsrille unterstützt ein verwirbelungsfreies Abfließen von Wasser aus den Querrillen in die breite Umfangsrille. Die Anordnung der bogenförmigen Querrillen ist vor allem für eine stabilisierende Wirkung der Querrillen und eine gute Wasserableitung vorteilhaft.

Bei einer bevorzugten Ausführungsform der Erfindung weisen die Querrillen, abgesehen von jenem Bereich, an welchem jeweils die Fase ausgebildet ist, eine konstante Breite von 0,4 mm bis 1,2 mm auf. Querrillen dieser Breite sind für die Generierung eines besonders leisen Reifen-/Fahrbahngeräusches besonders günstig.

Vorzugsweise betragen die spitzen Winkel, unter welchen die Schenkel der Querrillen zur Umfangsrichtung verlaufen, 40° bis 80°.

Durch den Verlauf bzw. die Anordnung der Fasen kann auf das Wasserableitvermögen der Querrillen gezielt Einfluss genommen werden. Diesbezüglich ist es vorteilhaft, wenn die Fasen zumindest im Bereich der ersten Schenkel der Querrillen ausgebildet. Bevorzugt ist ferner eine Ausführung, bei der die Fasen entlang eines gerundeten Übergangsabschnittes zum zweiten Schenkel unter kontinuierlicher Verringerung ihrer Breite und ihrer Tiefe in Richtung Profilrippenaußenfläche auslaufen. Alternativ kann vorgesehen sein, dass die Fasen auch entlang der zweiten Schenkel verlaufen und unter kontinuierlicher Verringerung ihrer Breite und Tiefe entlang der zweiten Schenkel in Richtung Profilrippenaußenfläche auslaufen.

Nachdem die stabilisierende Wirkung der Fasen vor allem bei neuem Reifen wesentlich ist, werden die Fasen derart ausgeführt, dass sie bis in eine Tiefe von 1,5 mm bis 2,5 mm reichen und unter einem Winkel von 35° bis 50° zur radialen Richtung verlaufen.

Eine besonders günstige Beeinflussung des Reifen-/Fahrbahngeräusches lässt sich mit einer Ausführung des Laufstreifens erzielen, bei der im Laufstreifen zwei voneinander durch eine Umfangsrille getrennte Profilrippen mit erfindungsgemäß ausgeführten bogenförmig verlaufenden und einschnittartig ausgebildeten Querrillen vorgesehen sind, wobei in jeder Profilrippe die Querrillen jeweils übereinstimmend bogenförmig verlaufen, wobei, bezogen auf die Umfangsrichtung des Laufstreifens, die Querrillen in der einen Profilrippe bezüglich der einen Umfangsrichtung gebogen sind und die Querrillen in der anderen Profilrippe bezüglich der anderen Umfangsrichtung gebogen sind.

Zur Verbesserung der Nassgriffeigenschaften kann ferner vorgesehen sein, dass zumindest in einer Profilrippe Querrillen ausgebildet sind, welche in Fortsetzung des zweiten Schenkels die Profilrippe durchqueren.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Draufsicht auf einen Ausschnitt eines Abschnitt eines Laufstreifens eines Fahrzeugluftreifens,
Fig. 2 einen Schnitt entlang der Linie II-II der Fig. 1,
Fig. 3 einen Schnitt entlang der Linie III-III der Fig. 1,
Fig. 4 einen Schnitt entlang der Linie IV-IV der Fig. 1 und
Fig. 5 einen Schnitt entlang der Linie V-V der Fig. 1.

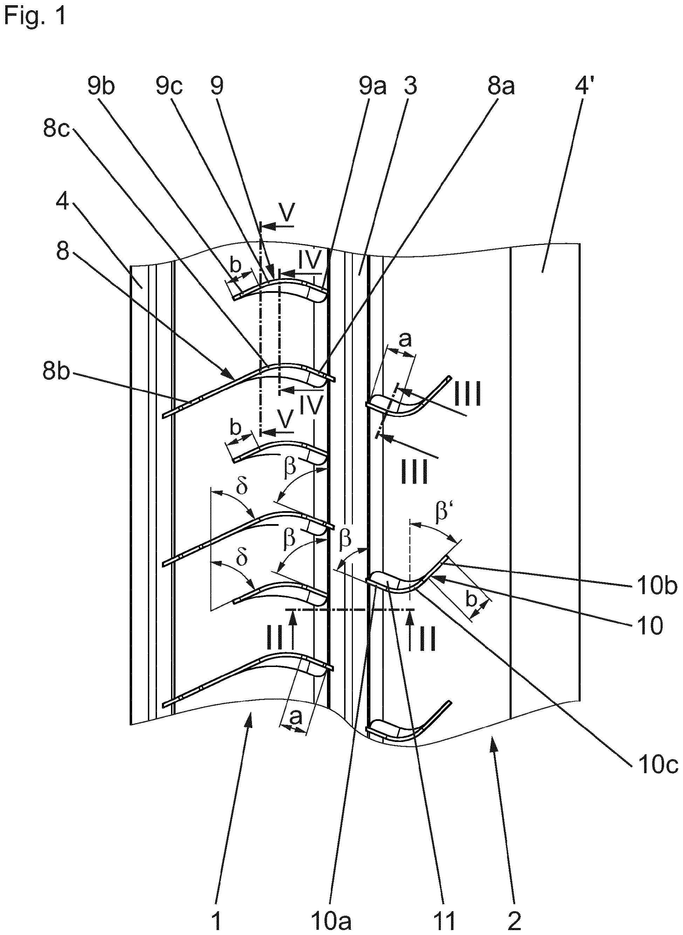

Fig. 1 zeigt eine Ansicht eines Ausschnittes eines erfindungsgemäß ausgeführten Laufstreifens eines Fahrzeugluftreifens, insbesondere eines Reifens für Personenkraftwagen, Vans und dergleichen. Dargestellt ist ein Umfangsabschnitt von zwei in Umfangsrichtung umlaufenden Profilrippen 1, 2, welche voneinander durch eine breite, in Umfangsrichtung umlaufende Umfangsrille 3 getrennt sind. Weitere Umfangsrillen 4, 4' verlaufen jeweils seitlich der Profilrippen 1, 2. Bei der gezeigten Ausführungsform verlaufen sämtliche Umfangsrillen 3, 4, 4' mit einer konstanten Breite und einer konstanten Tiefe gerade in Umfangsrichtung.

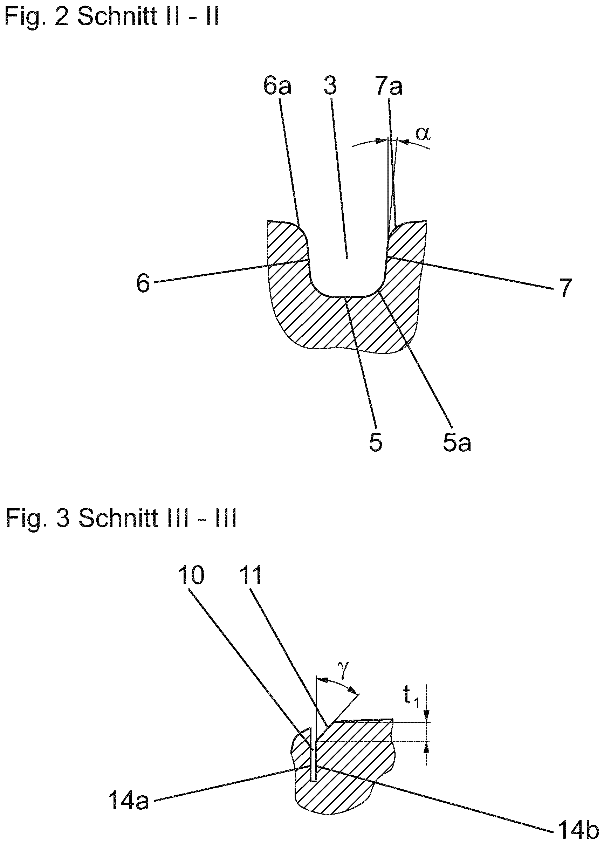

Fig. 2 zeigt einen Querschnitt durch die die beiden Profilrippen 1, 2 voneinander trennende Umfangsrille 3. Die Umfangsrille 3 weist einen im Wesentlichen U-förmigen Querschnitt mit einem Rillengrund 5, zwei Rillenflanken 6 und 7 mit je einem gerundeten Übergangsabschnitt 5a zwischen dem Rillengrund 5 und den Rillenflanken 6 und 7 und mit je einem gerundeten Übergangsabschnitt 6a, 7a zwischen den Rillenflanken 6, 7 und der Außenfläche der Profilrippen 1, 2 auf. Jeder Übergangsabschnitt 6a, 7a verläuft im Querschnitt entlang eines Kreisbogens mit einem Radius von 2 mm bis 3 mm, insbesondere von 2,5 mm. Die Übergangsabschnitte 6a, 7a verlaufen dabei im Querschnitt im Wesentlichen entlang von Viertelkreisen, da die Rillenflanken 6, 7 entweder in radialer Richtung oder unter einem kleinen spitzen Winkel α, welcher bis zu 7° beträgt, zur radialen Richtung verlaufen, derart, dass die Breite der Umfangsrille 3 in Richtung zur Außenfläche der Profilrippen 1, 2 größer wird.

In den Profilrippen 1, 2 verlaufen einschnittartig ausgebildete Querrillen, in der Profilrippe 1 Querrillen 8, 9 und in der Profilrippe 2 Querrillen 10. Die Querrillen 8, 9, 10 weisen - bis auf Bereiche, wo oberflächlich Fasen 11, 12, 13 ausgebildet sind - eine Breite von 0,4 mm bis 1,2 mm auf.

Die Querrillen 10 in der Profilrippe 2 verlaufen unter im Wesentlichen gleich großen Abständen von vorzugsweise mindestens 20 mm, münden in die Umfangsrille 3 und enden innerhalb der Profilrippe 2, beispielsweise in einem Abstand von 5 mm bis 10 mm vor der Umfangsrille 4'. In Draufsicht betrachtet verläuft jede Querrille 10 im Wesentlichen entlang eines gering gekrümmten Bogens und weist über ihre Erstreckung eine zumindest im Wesentlichen konstante Tiefe auf, die insbesondere mindestens 70 % der Tiefe der Umfangsrille 3 entspricht, wobei die Umfangsrille 3 eine Tiefe von 6,5 mm bis 8 mm aufweist. In Folge ihres im Wesentlichen leicht bogenförmigen Verlaufes weist die Querrille 10 einen in die Umfangsrille 3 mündenden Schenkel 10a, welcher unter einem Winkel β von 40° bis 80° zur Umfangsrichtung verläuft, und einen zweiten Schenkel 10b auf, welcher gegensinnig zum Schenkel 10a unter einem Winkel β' von 40° bis 80° zur Umfangsrichtung verläuft. Die Winkel β und β' können unterschiedlich groß sein. Zwischen den beiden Schenkeln 10a und 10b verläuft ein in Draufsicht gerundeter Übergangsabschnitt 10c. Wie Fig. 3 zeigt, weist die Querrille 10 zwei Rillenflanken 14a, 14b auf, wobei an der bogeninnenseitigen die Fase 11 ausgebildet ist, welche nahe der Oberfläche der Profilrippe 2, entlang des Schenkels 10a und des Übergangsabschnittes 10c, eine Verbreiterung des Einschnittes 10 zur Außenfläche der Profilrippe 2 bewirkt. Die Fase 11 verläuft unter einem Winkel γ von 35° bis 50° zur radialen Richtung und reicht im Bereich des Schenkels 10a in radialer Richtung bis in eine Tiefe t₁, die etwa 1,5 mm bis 2,5 mm, insbesondere 2 mm, beträgt. Im Bereich des Übergangsabschnittes 10c läuft die Fase 11 unter kontinuierlicher Verringerung ihrer Breite und Tiefe an der Außenfläche der Profilrippe 2 aus.

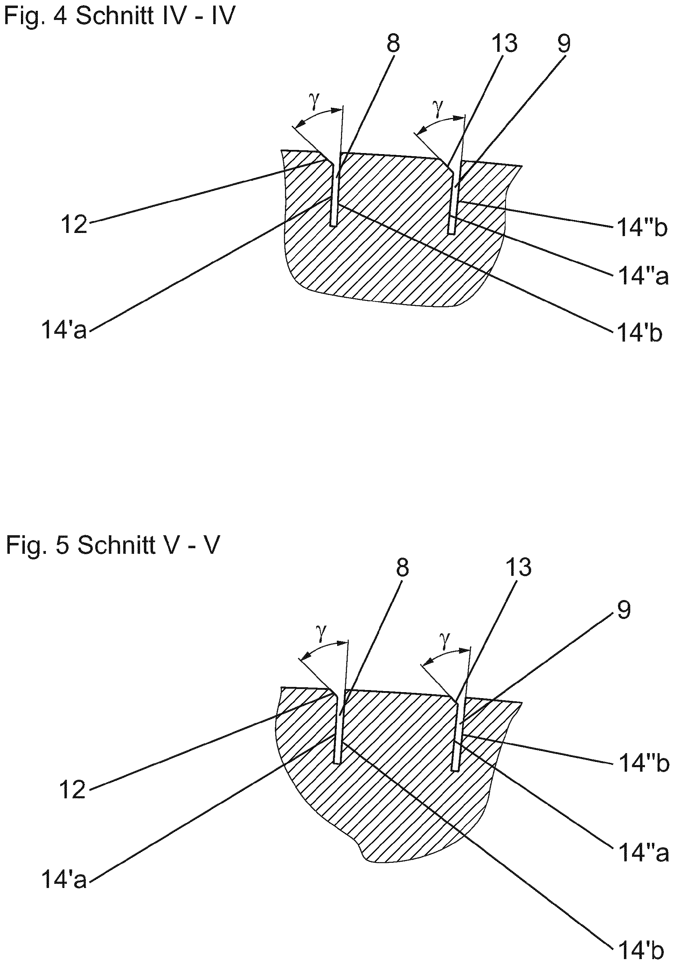

In der Profilrippe 1 sind die Querrillen 8 und 9 in Umfangsrichtung jeweils abwechselnd vorgesehen, wobei die Querrillen 8 die Profilrippe 1 zwischen der Umfangsrille 3 und der Umfangsrille 4 durchqueren, während die Querrillen 9 analog zu den Querrillen 10 innerhalb der Profilrippe 1 enden. Der gegenseitige Abstand der abwechselnd vorgesehenen Querrillen 8 und 9 entspricht etwa der Hälfte des gegenseitigen Abstandes der Querrillen 10 in der Profilrippe 2. Die Querrillen 9 verlaufen im Wesentlichen in Querrichtung und entlang von gering gekrümmten Bögen. Die Querrillen 8 verlaufen bei der Umfangsrille 3 analog zu den Querrillen 9 in Bogenform, wobei der bogenförmige Abschnitt in einen im Wesentlichen gerade bis zur Umfangsrille 4 verlaufenden Schenkel 8b übergeht. Die "Bögen" der Querrillen 8 und 9 sind übereinstimmend orientiert und verlaufen zueinander parallel. Sowohl die Querrillen 8 als auch die Querrillen 9 weisen in Draufsicht jeweils einen in die Umfangsrille 3 mündenden Schenkel 8a, 9a, die Querrillen 9 ferner einen innerhalb der Profilrippe 2 endenden Schenkel 9b auf. Zwischen den Schenkeln 8a und 8b bzw. 9a und 9b sind gerundete Übergangsabschnitte 8c, 9c vorhanden. Die Schenkel 8a, 9a verlaufen unter dem Winkel β zur Umfangsrichtung, welcher 40° bis 80° beträgt, die Schenkel 8b und 9b gegensinnig zu den Schenkeln 8a, 9a und unter einem Winkel δ zur Umfangsrichtung, welcher ebenfalls 40° bis 80° beträgt. Die Figuren 4 und 5 zeigen Schnitte durch die Querrillen 8, 9 mit Rillenflanken 14'a, 14'b bzw. 14"a, 14"b sowie mit Fasen 12, 13. An den Innenseiten der Bogenform der Querrillen 8, 9 sind an der jeweils bogeninnenseitigen Rillenflanke 14'b, 14"b von einer Tiefe von 1,5 mm bis 2,5 mm ausgehend in Richtung Außenfläche der Profilrippe 1 die Fasen 12, 13 ausgebildet, deren Neigungswinkel γ zur radialen Richtung 35° bis 50° beträgt. Die Fasen 12, 13 verlaufen zumindest entlang der Schenkel 8a, 9a und der Übergangsabschnitte 8c, 9c. Entlang der Schenkel 8b, 9b verlaufen die Fasen 12, 13 unter kontinuierlicher Verringerung ihrer Breite und ihrer radialen Erstreckung aus. Bezogen auf die Umfangsrichtungen des Laufstreifens sind die in der Profilrippe 1 ausgebildeten Querrillen 8, 9 bezüglich der einen Umfangsrichtung gebogen, die Querrillen 10 in der Profilrippe 2 bezüglich der anderen Umfangsrichtung.

Die Schenkel 8a, 9a und 10a der Querrillen 8, 9, 10 weisen eine Erstreckungslänge a auf, welche 3 mm bis 7 mm beträgt, die Schenkel 9b und 10b weisen eine Erstreckungslänge b auf, die 3 mm bis 9 mm beträgt.

Die Querrillen 8, 9, 10 können insbesondere im Bereich ihrer Schenkel 8a, 9a, 10a lokal einen Abschnitt mit verringerter Tiefe aufweisen, sodass in diesem Abschnitt ihre Tiefe bis auf oder nahezu bis auf die Tiefe der Fasen 11, 12, 13 verringert ist.

### Bezugsziffernliste

- 1, 2: Profilrippe
- 3, 4, 4': Umfangsrille
- 5: Rillengrund
- 5a: Übergangsabschnitt
- 6, 7: Rillenflanke
- 6a, 7a: Übergangsabschnitt
- 8, 9, 10: Querrille
- 8a, 9a, 10a: Schenkel
- 8b, 9b, 10b: Schenkel
- 8c, 9c, 10c: Übergangsabschnitt
- 11, 12, 13: Fase
- 14a, 14b: Rillenflanke
- 14'a, 14'b: Rillenflanke
- 14"a, 14"b: Rillenflanke
- a, b: Erstreckungslänge
- t₁: Tiefe
- α, β, β', γ, δ: Winkel

## Patentansprüche

1. Fahrzeugluftreifen mit einem Laufstreifen, welcher durch Umfangsrillen (3, 4) in in Umfangsrichtung umlaufende Profilpositive gegliedert ist, wobei zu diesen Profilpositiven zumindest eine in Umfangsrichtung umlaufende Profilrippe (1, 2) gehört, in welcher parallel zueinander einschnittartig ausgebildete Querrillen (8, 9, 10) verlaufen, die in zumindest eine die Profilrippe (1, 2) begrenzende Umfangsrille (3, 4) münden und zumindest in einem Abschnitt ihrer Erstreckung nahe der Rippenaußenfläche durch eine Fase (11, 12, 13) verbreitert sind sowie bogenförmig zur Umfangsrille (3, 4) verlaufen, wobei die Fasen (11, 12, 13) jeweils an der bogeninnenseitig verlaufenden Rillenflanke (14b, 14'b, 14"b) der Querrillen (8, 9, 10) ausgebildet sind,
**dadurch gekennzeichnet,**
**dass** der Übergangsbereich (6a, 7a) zwischen jener Rillenflanke (6, 7) der Umfangsrille (3), in welche die einschnittartig ausgebildeten Querrillen (8, 9, 10) münden, und der Außenfläche der Profilrippe (1, 2) gerundet ausgeführt ist, wobei die Querrillen (8, 9, 10) einen ersten in die Umfangsrille (3) mündenden Schenkel (8a, 9a, 10a), welcher sich unter einem spitzen Winkel (β) zur Umfangsrichtung erstreckt, und einen zweiten Schenkel (8b, 9b, 10b) aufweisen, welcher, gegensinnig zum ersten Schenkel (8a, 9a, 10a) verlaufend, sich ebenfalls unter einem spitzen Winkel (β', δ) zur Umfangsrichtung erstreckt.

2. Fahrzeugluftreifen nach Anspruch 1, **dadurch gekennzeichnet, dass** die Querrillen (8, 9, 10), abgesehen von jenem Bereich, an welchem jeweils die Fase (11, 12, 13) ausgebildet ist, eine konstante Breite von 0,4 mm bis 1,2 mm aufweisen.

3. Fahrzeugluftreifen nach Anspruch 1 oder 2, **dadurch gekennzeichnet, dass** die spitzen Winkel (β, β', δ), unter welchen die Schenkel (8a, 9a, 10a) der Querrillen (8,9, 10) zur Umfangsrichtung verlaufen, 40° bis 80° betragen.

4. Fahrzeugluftreifen nach einem der Ansprüche 1 bis 3, **dadurch gekennzeichnet, dass** die Fasen (11, 12, 13) zumindest im Bereich der ersten Schenkel (8a, 9a, 10a) der Querrillen (8, 9, 10) ausgebildet sind.

5. Fahrzeugluftreifen nach einem der Ansprüche 1 bis 4, **dadurch gekennzeichnet, dass** die Fase (11) entlang eines gerundeten Übergangsabschnittes (10c) zum zweiten Schenkel (10b) unter kontinuierlicher Verringerung ihrer Breite und ihrer Tiefe (t₁) in Richtung Profilrippenaußenfläche ausläuft.

6. Fahrzeugluftreifen nach einem der Ansprüche 1 bis 5, **dadurch gekennzeichnet, dass** die Fase (12, 13) entlang eines gerundeten Übergangsabschnittes (8c, 9c) zum zweiten Schenkel (8b, 9b) und entlang des zweiten Schenkels (8b, 9b) unter kontinuierlicher Verringerung ihrer Breite und ihrer Tiefe (t₁) in Richtung Profilrippenaußenfläche ausläuft.

7. Fahrzeugluftreifen nach einem der Ansprüche 1 bis 6, **dadurch gekennzeichnet, dass** die Fase (11, 12, 13) bis in eine Tiefe (t₁) von 1,5 mm bis 2,5 mm reicht und unter einem Winkel (γ) von 35° bis etwa 50° zur radialen Richtung verläuft.

8. Fahrzeugluftreifen nach einem der Ansprüche 1 bis 7, **dadurch gekennzeichnet, dass** im Laufstreifen zwei voneinander durch eine Umfangsrille (3) getrennte Profilrippen (1, 2) mit Querrillen (8, 9, 10) vorgesehen sind, wobei in jeder Profilrippe (1, 2) die Querrillen (8, 9, 10) jeweils übereinstimmend bogenförmig verlaufen, wobei bezogen auf die Umfangsrichtung des Laufstreifens die Querrillen (10) in der einen Profilrippe (2) bezüglich der einen Umfangsrichtung gebogen sind und die Querrillen (8, 9) in der anderen Profilrippe (1) bezüglich der anderen Umfangsrichtung gebogen sind.

9. Fahrzeugluftreifen nach einem der Ansprüche 1 bis 8, **dadurch gekennzeichnet, dass** in einer Profilrippe (2) Querrillen (10) ausgebildet sind, welche in Fortsetzung des zweiten Schenkels (10b) die Profilrippe (2) durchqueren.

## Claims

1. Pneumatic vehicle tyre having a tread which is divided by circumferential channels (3, 4) into profile positives which run in encircling fashion in a circumferential direction, wherein said profile positives include at least one profile rib (1, 2) which runs in encircling fashion in the circumferential direction and in which transverse channels (8, 9, 10) of sipe-like form extend parallel to one another, which transverse channels open into at least one circumferential channel (3, 4) which delimits the profile rib (1, 2), and which transverse channels, at least in a section of their extent close to the rib outer surface, are widened by means of a bevel (11, 12, 13) and extend arcuately to the circumferential channel (3, 4), wherein the bevels (11, 12, 13) are formed in each case on that channel flank (14b, 14'b, 14"b) of the transverse channels (8, 9, 10) which runs at the inside of the arc,
**characterized**
**in that** the transition region (6a, 7a) between that channel flank (6, 7) of the circumferential channel (3) into which the transverse channels (8, 9, 10) of sipe-like form open and the outer surface of the profile rib (1, 2) is of rounded design, wherein the transverse channels (8, 9, 10) have a first limb (8a, 9a, 10a), which opens into the circumferential channel (3) and which extends at an acute angle (β) with respect to the circumferential direction, and a second limb (8b, 9b, 10b) which, running oppositely to the first limb (8a, 9a, 10a), likewise extends at an acute angle (β', δ) with respect to the circumferential direction.

2. Pneumatic vehicle tyre according to Claim 1, **characterized in that** the transverse channels (8, 9, 10) have a constant width of 0.4 mm to 1.2 mm, aside from the region at which the bevel (11, 12, 13) is formed in each case.

3. Pneumatic vehicle tyre according to Claim 1 or 2, **characterized in that** the acute angles (β, β', δ) at which the limbs (8a, 9a, 10a) of the transverse channels (8, 9, 10) extend with respect to the circumferential direction amount to 40° to 80°.

4. Pneumatic vehicle tyre according to one of Claims 1 to 3, **characterized in that** the bevels (11, 12, 13) are formed at least in the region of the first limbs (8a, 9a, 10a) of the transverse channels (8, 9, 10).

5. Pneumatic vehicle tyre according to one of Claims 1 to 4, **characterized in that** the bevel (11) tapers off, along a rounded transition section (10c) to the second limb (10b), with a continuous decrease of its width and its depth (t₁) in the direction of the profile rib outer surface.

6. Pneumatic vehicle tyre according to one of Claims 1 to 5, **characterized in that** the bevel (12, 13) tapers off, along a rounded transition section (8c, 9c) to the second limb (8b, 9b) and along the second limb (8b, 9b), with a continuous decrease of its width and its depth (t₁) in the direction of the profile rib outer surface.

7. Pneumatic vehicle tyre according to one of Claims 1 to 6, **characterized in that** the bevel (11, 12, 13) extends to a depth (t₁) of 1.5 mm to 2.5 mm and runs at an angle (γ) of 35° to approximately 50° with respect to the radial direction.

8. Pneumatic vehicle tyre according to one of Claims 1 to 7, **characterized in that**, in the tread, two profile ribs (1, 2) are provided which are separated from one another by a circumferential channel (3) and which have transverse channels (8, 9, 10), wherein, in each profile rib (1, 2), the transverse channels (8, 9, 10) each run in correspondingly arcuate fashion, wherein, in relation to the circumferential direction of the tread, the transverse channels (10) in one profile rib (2) are curved relative to one circumferential direction, and the transverse channels (8, 9) in the other profile rib (1) are curved relative to the other circumferential direction.

9. Pneumatic vehicle tyre according to one of Claims 1 to 8, **characterized in that**, in one profile rib (2), there are formed transverse channels (10) which extend across the profile rib (2) in a continuation of the second limb (10b).

## Revendications

1. Pneumatique de véhicule comprenant une bande de roulement qui est divisée par des rainures périphériques (3, 4) en parties profilées positives s'étendant dans la direction périphérique, au moins une nervure profilée (1, 2) s'étendant dans la direction périphérique appartenant à ces parties profilées positives, dans laquelle s'étendent des rainures transversales (8, 9, 10) réalisées sous forme d'entailles parallèles les unes aux autres, qui débouchent dans au moins une rainure périphérique (3, 4) limitant la nervure profilée (1, 2), et qui sont élargies au moins dans une portion de leur étendue à proximité de la surface extérieure de la nervure par un biseau (11, 12, 13) et s'étendent sous forme courbe vers la rainure périphérique (3, 4), les biseaux (11, 12, 13) étant réalisés à chaque fois au niveau du flanc de rainure (14b, 14'b, 14"b) des rainures transversales (8, 9, 10) s'étendant du côté intérieur de la courbure,
**caractérisé en ce que**
la région de transition (6a, 7a) entre les flancs de rainure (6, 7) de la rainure périphérique (3), dans laquelle débouchent les rainures transversales (8, 9, 10) réalisées sous forme d'entailles, et la surface extérieure de la nervure profilée (1, 2) est réalisée sous forme arrondie, les rainures transversales (8, 9, 10) présentant une première branche (8a, 9a, 10a) débouchant dans la rainure périphérique (3), qui s'étend suivant un angle aigu (β) par rapport à la direction périphérique, et une deuxième branche (8b, 9b, 10b) qui s'étend également suivant un angle aigu (β', δ) par rapport à la direction périphérique en s'étendant dans le sens inverse de la première branche (8a, 9a, 10a).

2. Pneumatique de véhicule selon la revendication 1, **caractérisé en ce que** les rainures transversales (8, 9, 10), à part la région au niveau de laquelle est à chaque fois réalisé le biseau (11, 12, 13), présentent une largeur constante de 0,4 mm à 1,2 mm.

3. Pneumatique de véhicule selon la revendication 1 ou 2, **caractérisé en ce que** les angles aigus (β, β', δ) suivant lesquels s'étendent les branches (8a, 9a, 10a) des rainures transversales (8, 9, 10) par rapport à la direction périphérique, sont de 40° à 80°.

4. Pneumatique de véhicule selon l'une quelconque des revendications 1 à 3, **caractérisé en ce que** les biseaux (11, 12, 13) sont réalisés au moins dans la région des premières branches (8a, 9a, 10a) des rainures transversales (8, 9, 10).

5. Pneumatique de véhicule selon l'une quelconque des revendications 1 à 4, **caractérisé en ce que** le biseau (11) se termine le long d'une portion de transition arrondie (10c) vers la deuxième branche (10b) en réduisant de manière continue sa largeur et sa profondeur (t₁) dans la direction de la surface extérieure de la nervure profilée.

6. Pneumatique de véhicule selon l'une quelconque des revendications 1 à 5, **caractérisé en ce que** le biseau (12, 13) se termine le long d'une portion de transition arrondie (8c, 9c) vers la deuxième branche (8b, 9b) et le long de la deuxième branche (8b, 9b) en réduisant de manière continue sa largeur et sa profondeur (t₁) dans la direction de la surface extérieure de la nervure profilée.

7. Pneumatique de véhicule selon l'une quelconque des revendications 1 à 6, **caractérisé en ce que** le biseau (11, 12, 13) s'étend jusqu'à une profondeur (t₁) de 1,5 mm à 2,5 mm et s'étend suivant un angle (γ) de 35° à environ 50° par rapport à la direction radiale.

8. Pneumatique de véhicule selon l'une quelconque des revendications 1 à 7, **caractérisé en ce que** dans la bande de roulement, deux nervures profilées (1, 2) séparées l'une de l'autre par une rainure périphérique (3) sont pourvues de rainures transversales (8, 9, 10), les rainures transversales (8, 9, 10) s'étendant sous forme courbe à chaque fois de manière coïncidente dans chaque nervure profilée (1, 2), par rapport à la direction périphérique de la bande de roulement les rainures transversales (10) dans l'une des nervures profilées (2) étant courbées par rapport à l'une des directions périphériques et les rainures transversales (8, 9) dans l'autre nervure profilée (1) étant courbées par rapport à l'autre direction périphérique.

9. Pneumatique de véhicule selon l'une quelconque des revendications 1 à 8, **caractérisé en ce que** des rainures transversales (10) sont réalisées dans une nervure profilée (2), lesquelles traversent la nervure profilée (2) dans le prolongement de la deuxième branche (10b).
